# EUROPEAN PATENT APPLICATION

(11) **EP 1 486 855 A1**
(43) Date of publication of application: **15.12.2004**
(21) Application number: 04291395.4
(22) Date of filing: 04.06.2004
(51) Int. Cl.: G06F 1/00

(54) **Use of a kiosk to provide verifiable identification using cryptographic identifiers**

(30) Priority: 06.06.2003 US 455989
(71) Applicant: NEOPOST INDUSTRIE, F-92220 Bagneux (FR)
(72) Inventor: Leon, J.P., San Carlos California 94070 (US)
(74) Representative: David, Alain

(57) **Abstract**

A method of providing verifiable identification credentials for a subject at a credential generation station (CGS) includes acquiring biometric information from the subject, incorporating the biometric information into a message, cryptographically processing the message to generate a cryptographic identifier that will serve to authenticate the message, and storing the message and the cryptographic identifier for subsequent authentication. The message may include additional information relating to one or more of the specific CGS, the subject, or the time of creating the message. A method of verifying the identification of a subject at a credential verification station (CVS) includes processing a cryptographic identifier and a message that includes previously acquired biometric information, where the cryptographic identifier and the message nominally correspond to the subject, and determining whether the cryptographic identifier authenticates the message. At least if the message is cryptographically authenticated, biometric information is acquired from the subject, and it is determined whether the newly acquired biometric information satisfies a proximity relationship to the biometric information from the message.

## Description

### CROSS-REFERENCE TO RELATED APPLICATIONS

The following commonly owned U.S. patent applications are hereby incorporated by reference in their entirety (including all attached documents and appendices) for all purposes:
- Application No. 10/201,558, filed July 22, 2002, titled "Hybrid Kiosk Architecture for Dispensing Postage" (J. P. Leon);
- Application No. 10/109,539, filed March 26, 2002, titled "Techniques for Dispensing Postage Using a Communications Network" (J. P. Leon);
- Application No. 09/902,480, filed July 9, 2001, titled "Method and System for Providing Stamps by Kiosk" (James D. L. Martin, et. al.);
- Application No. 09/708,971, filed November 7, 2000, titled "Providing Stamps on Secure Paper Using a Communications Network," (J. P. Leon, et. al.); and
- Application No. 09/708,883, filed November 7, 2000, titled "Techniques for Dispensing Postage Using a Communication Network," (L. Carlton Brown, Jr., et. al.).

### BACKGROUND OF THE INVENTION

This application relates generally to cryptographic systems and methods, and more specifically to techniques for providing verifiable identification of a subject such as a human.

Forged or otherwise fraudulent identification documents remain a vexing problem in society. Unreliable identification documents are a problem, both for people wishing to verify the identity of another person, and for people who wish to be able to provide identification that can readily be verified.

Many forms of identification documents, such as passports and driver's licenses, are issued by governmental authorities, and require lengthy waiting periods for the documents to be issued. Furthermore, such documents are subject to forgery, although there have been advances in making documents more difficult to duplicate or alter. Many common forms of identification include biometric information such as images of faces and fingerprints.

### SUMMARY OF THE INVENTION

The present invention provides techniques whereby a subject's identity can be rapidly verified. Embodiments of the present invention support a wide variety of authentication regimes.

According to an aspect of the invention, a method of providing verifiable identification credentials for a subject in a credential generation phase includes acquiring biometric information from the subject, incorporating the biometric information into a message, cryptographically processing the message to generate a cryptographic identifier that will serve to authenticate the message, and storing the message and the cryptographic identifier for subsequent authentication. The message may include additional information relating to one or more of the specific credential generation station (CGS) at which the biometric information was acquired, the subject, or the time of creating the message.

The term "biometric" information is used to refer to any physical characteristic or personal trait of a subject. Some biometric information such as fingerprints are generally considered unique to each subject, while other biometric information such as height and weight are shared by many subjects. Other biometric attributes include faces, voiceprints, palm prints, foot prints, retinal scans, and iris scans. Depending on the precision of the measurement, these attributes range from distinctive to unique.

The term "storing" information is used in a broad sense of providing a persistent representation of the information that can later be retrieved for use, and includes such mechanisms as printing, magnetically encoding, optically encoding, and electronically encoding. A combination of different mechanisms may be used.

In typical embodiments, the cryptographic identifier is a digital signature, but other types of cryptographic identifiers can be used. For example, encryption techniques can be used during generation of the cryptographic identifier and subsequent authentication.

The message and cryptographic identifier may be stored on a portable unit (also referred to as an identification card) that is provided to the subject. When the message and cryptographic information are stored on the identification card, they are typically stored in machine-readable form, and some of the biometric information (e.g., an image of the subject's face) is provided in human-readable graphical form. Depending on the implementation, the portable unit may be generated locally, i.e., at the CGS where the subject provided the biometric information, or at a remote location, referred to as a credentialing infrastructure system (CIS).. Similarly, in some embodiments, the CGS generates the cryptographic identifier; in others the CIS generates it.

According to an aspect of the invention, a method of verifying the identification of a subject includes processing a cryptographic identifier and a message that includes previously acquired biometric information, where the cryptographic identifier and the message nominally correspond to the subject, and determining whether the cryptographic identifier authenticates the message. At least if the message is cryptographically authenticated, biometric information is acquired from the subject, and it is determined whether the newly acquired biometric information satisfies a proximity relationship to the biometric information from the message.

The subject's identification is considered verified only if the message is authenticated and the two sets of biometric information satisfy the proximity relationship. Depending on the implementation, it may be that the identification fails as a result of only performing one of the above two tests. For example, if the cryptographic authentication fails, acquiring the biometric information and comparing it with the biometric information in the message would not be necessary.

The subject identification typically occurs at a credential verification station (CVS), which, in some embodiments, may have only some of the functionality required for the identification verification. Thus, in such embodiments, some of the verification functions would be performed by the CIS rather than by the CVS. For example, if the CVS does not have digital signature verification capabilities, that function is performed by the CIS. Similarly, if the CVS does not have the pattern matching capabilities, that function is performed by the CIS.

The comparison may be a visual comparison by a human operator of the subject's face and a graphical representation of the subject's face as previously acquired in connection with generating the message. Alternatively, the newly acquired biometric information may be an electronic version generated by the CVS, and the comparison may be performed by a computer system (in the CVS or in the CIS).

According to an aspect of the invention, a processor-based credential generation apparatus includes a biometric module for acquiring biometric information from a subject, a cryptographic module for generating a cryptographic identifier for a message that includes the biometric information from the biometric module, and an output module that transmits the message and cryptographic identifier for storage. The credential generating apparatus may also include an encoder in communication with the output module for encoding the message and the cryptographic identifier in a portable unit (identification card) that is provided to the subject. Depending on the implementation, the CGS may lack one or more of cryptographic processing, storage, or encoding functionality, in which case such functionality is provided at a remote location by the CIS.

According to an aspect of the invention, a processor-based credential verification apparatus includes a biometric module for acquiring biometric information from a presented subject, an access module that receives a previously stored message having an associated cryptographic identifier, which previously stored message includes biometric information previously acquired from a subject nominally corresponding to the presented subject. The credential verification apparatus further includes a cryptographic module for verifying the cryptographic identifier to authenticate the previously stored message, and a matching module for determining whether the biometric information from the presented subject bears a proximity relationship to the biometric information included in the message.

An output module signifies a successful identity verification only if (a) the cryptographic module successfully verifies the cryptographic identifier, and (b) the matching module determines that the biometric information from the presented subject bears the proximity relationship to the biometric information in the message. Depending on the implementation, the CGS may lack one or more of cryptographic processing (for verification) or matching functionality, in which case such functionality is provided at a remote location by the CIS.

A further understanding of the nature and advantages of the present invention may be realized by reference to the remaining portions of the specification and the drawings.

### BRIEF DESCRIPTION OF THE DRAWINGS

FIG. 1 is a schematic view of an identification card according to an embodiment of the present invention;

FIG. 2 is a block diagram of a system for implementing an identification credential generation and verification system according to an embodiment of the present invention;

FIG. 3 is a block diagram of a credential generation station (CGS) according to an embodiment of the present invention;

FIG. 4 is a block diagram of a credential verification station (CVS) according to an embodiment of the present invention;

FIG. 5 is a block diagram of a credentialing infrastructure system (CIS) according to an embodiment of the present invention;

FIGS. 6A and 6B, taken together, provide a flowchart illustrating the transaction between a CGS and the CIS according to an embodiment of the present invention;

FIGS. 7A and 7B, taken together, provide a flowchart illustrating the transaction between a CGS and the CIS according to another embodiment of the present invention;

FIGS. 8A and 8B, taken together, provide a flowchart illustrating the transaction between a CVS and the CIS according to an embodiment of the present invention;

FIGS. 9A and 9B, taken together, provide a flowchart illustrating the transaction between a CVS and the CIS according to another embodiment of the present invention;

### DESCRIPTION OF SPECIFIC EMBODIMENTS

### Overview

The term "or," unless otherwise stated, is used in the inclusive (and/or) sense, as opposed to the exclusive (XOR) sense. Where the latter meaning is intended, words such as "but not both" will be used.

The present invention provides techniques whereby a subject, typically a human subject, can go to a credential generation station (CGS) and conveniently acquire identification credentials that can later be conveniently verified at a credential verification station (CVS). Specific embodiments utilize technology developed in connection with particular postage dispensing applications designed along the lines of the USPS's Information-Based Indicia Program (IBIP) specifications, and leverage off of that technology.

There are separate specifications for open and closed systems. The most recent specifications for open and closed systems are:
- Information-Based Indicia Program (IBIP) Performance Criteria for Information-Based Indicia and Security Architecture for Open IBI Postage Evidencing Systems (PCIBI-O) (Draft February 23, 2000), and
- Information-Based Indicia Program (IBIP) Performance Criteria for Information-Based Indicia and Security Architecture for Closed IBI Postage Metering Systems (PCIBI-C) (Draft January 12, 1999).
These are currently available for download from the USPS website at the following URL:
http://www.usps.com/postagesolutions/programdoc.html
and are herein incorporated by reference in their entirety for all purposes.

Credential generation typically entails acquiring biometric information from the subject, cryptographically processing the biometric (and other) information, and providing the subject a tangible item on which is stored information to be discussed below. This tangible item will sometimes be referred to as a portable unit, a card, or a document. In most instances, at least some information on a document will be machine-readable, but the invention does not require this. The invention does, however, entail machine operations for verification, so that information that is only in a human-readable form might have to be entered into a computer or similar device by a human operator, or captured by a scanner or video device and programmatically converted to its digital equivalent.

In one set of embodiments, the document is self-authenticating in the sense that the document contents provide all the information required to ascertain (a) whether the document was generated by an approved credential generation entity, and (b) whether the subject presenting the document is properly associated with the document. In this context, a statement that a document is "self-authenticating" does not foreclose the possibility that verifying the document and the subject will require accessing cryptographic support infrastructure.

In another set of embodiments, the document *per se* is not self-authenticating, but rather requires accessing a database that contains information necessary for the verification. That is, the document need only contain enough information to allow it to be matched with a database to verify that a database record corresponding to the subject exists. In one example, the subject is provided only with a unique identifier, which in an extreme case could have been displayed for the subject to write down or remember.

In some implementations, the subject interacts with a self-service kiosk to obtain the document, while in other implementations, the document is generated in the presence of a human operator. The operator might enter information into a computer, and might perform other functions such as inspecting and noting the inspection of other traditional identification credentials such as a driver's license, birth certificate, or passport).

### Exemplary Documents

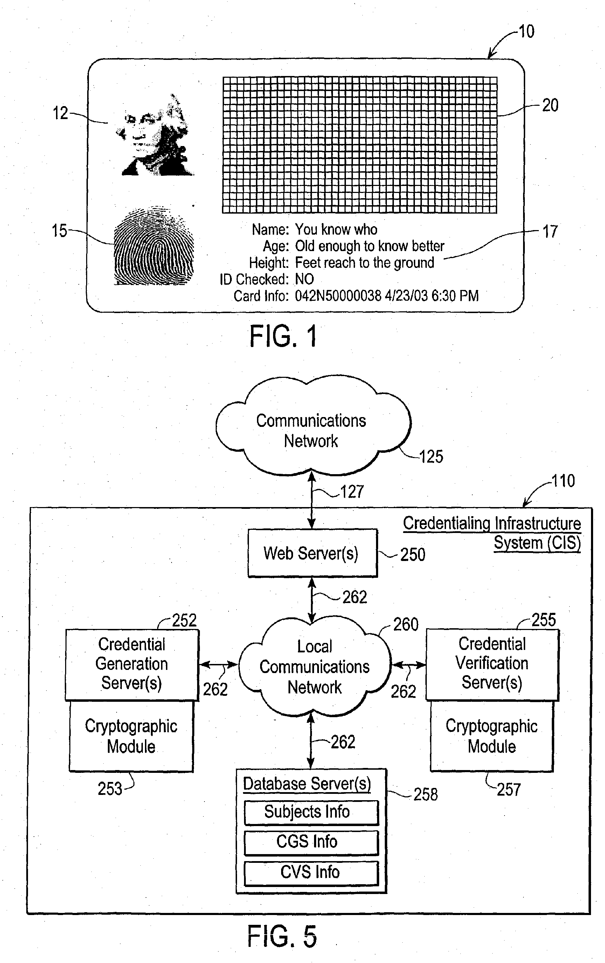

FIG. 1 is a schematic view of an identification card 10 according to an embodiment of the present invention. In this embodiment, the card includes human-readable graphical information including an image 12 of the subject's face and an image 15 of the subject's fingerprint, human-readable alphanumeric information 17, and machine-readable information 20, shown schematically as a grid. As will be discussed in greater detail below, identification documents may contain fewer or more elements, or different elements. Further, as mentioned above, a subject's face and fingerprint are but two of a broader class of biometric attributes, and embodiments of the present invention can avail themselves of other biometric attributes.

Depending on the implementation, the alphanumeric information may include subject information or information about the characteristics of the card. Subject information can include such items as name, address, or age, while card information can include such items as a unique identifier for the credential generation station or the date and time the card was generated. It is typically the case that the machine-readable information will include the human-readable information and additional information. Such additional information can include such items as digital representations of the graphical information or information supporting cryptographic authentication. As illustrated, the alphanumeric information includes both subject information and card information.

Subject information that is not biometric information is not inherently trustworthy. For example, if the subject obtained the card from a self-service kiosk, the subject could enter arbitrary false or fanciful information, and the system would merely incorporate this into the card. This is not a deficiency, however, since the card would still maintain its link to the subject whose biometric information is encoded in or in association with the card. On the other hand, if the subject obtained the card from a credential generation station that had a human operator (trusted individual) who could verify identification by other mechanisms, the non-biometric information could be assigned a higher level of trustworthiness, and the card information could reflect that fact. As illustrated, the subject did not provide meaningful subject information, and the card reflects the fact that the subject identification was not verified.

The present invention is not limited to any particular card or document technology. The graphical and human-readable alphanumeric information can be provided by printing on any of a wide variety of substrates, including paper-based products or plastic materials. Machine-readable information 20 can also be encoded in a magnetic strip, such as the type in wide use on credit cards, ATM cards, and stored-value cards. The machine-readable information can also be encoded in an optical medium, such as the type of write-once-read-many optical card provided by LaserCard Systems Corporation, 2644 Bayshore Parkway, Mountain View, California 94043. The machine-readable information can also be encoded in an electronic storage medium such as a Smart Card. A smart card is a plastic card having one or more embedded integrated chips that, at a minimum, store data. Smart Cards can also include a processor that performs more sophisticated operations. Smart Cards are available from many vendors, including CardLogix Corporation, 16 Hughes, Suite 100, Irvine, California 92618.

In some embodiments, machine-readable information 20 is encoded in a printed two-dimensional symbology. Two particular symbologies that have been approved for use in postal indicia and are in widespread use in other fields are PDF417 and Data Matrix. PDF417 is a stacked two-dimensional barcode available from Symbol Technologies, Inc., One Symbol Plaza, Holtsville, New York 11742. Data Matrix is two-dimensional matrix code where the information is encoded by absolute dot position rather than relative dot position, and is available from RVSI Acuity CiMatrix, 5 Shawmut Road, Canton, Massachusetts 02021 (a division of Robotic Vision, Systems, Incorporated). While these symbologies are not as ubiquitous as the well-known UPC barcode, relatively inexpensive symbology readers are readily available.

### Distributed Network Environment

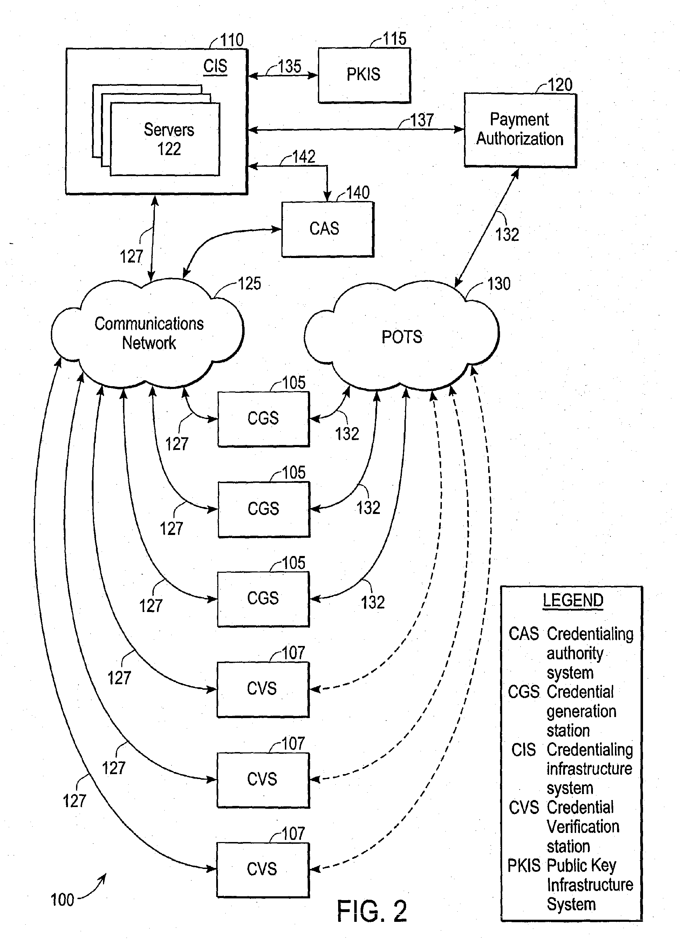

FIG. 2 is a simplified block diagram of a distributed computer network 100 that may incorporate one or more credential generation stations (CGS) 105 in an embodiment of the present invention. Computer network 100 includes, in addition to CGSs 105, one or more credential verification stations (CVS) 107, at least one credentialing infrastructure system (CIS) 110, a public key infrastructure system (PKIS) 115, and a payment authorization entity 120. CIS 110 is shown as including a plurality of servers 122, which represents a specific implementation.

Credential generation stations 105 communicate with CIS 110 over a communications network 125 via communication links 127. Communications network 125 may itself comprise many interconnected computer systems and communication links. Communication links 127 may be hardwire links, optical links, satellite or other wireless communication links, wave propagation links, or any other mechanisms for communication of information. In one embodiment communications network 125 is the Internet, but the invention can be implemented in other network environments. Further, communication over the public telephone system, referred to as the plain old telephone system (POTS) 130, supports an alternative communication path between some or all of CGSs 105 and payment authorization entity 120 via links 132.

Credential verification stations 107 also communicate with CIS 110, possibly over the same or a different communications network as that over which credential generation stations 105 communicate with CIS 110. For purposes of illustration, CVSs 107 are shown also communicating over communications network 125 via communication links 127. In some instances, depending on their configurations, the CVSs may also communicate via the public telephone system.

While PKIS 115 is shown as separate from CIS 110, in communication with the CIS over a link 135, it may be a part of CIS 110. Similarly, while payment authorization entity 120 is shown as separate from CIS 110, in communication with the CIS over a link 137, it may be a part of CIS 110. This network configuration is exemplary in the sense that it may contain more or fewer elements. For example, more than one CIS 110 may be coupled to communications network 125. Similarly, CIS 110 and PKIS 115 are shown as communicating on a dedicated link 135, but they may also (or alternatively) communicate over communications network 125.

As alluded to above, in a specific embodiment, at least some of the credential generation stations are self-serve kiosks. In some embodiments, the kiosks do not have cryptographic signing capability, but rather rely on cryptographic signing capability at CIS 110. These kiosks are said to operate in a network mode during the generation of identification credentials. In other embodiments, the kiosks are self-contained with cryptographic signing capability and generate identification credentials without needing to establish communication with CIS 110. These kiosks are capable of operating in a local mode during the generation of identification credentials, although it is preferred in some implementations for such kiosks to engage the CIS during the generation of identification credentials.

**,** In other embodiments, the kiosks are hybrid kiosks that utilize the cryptographic signing and other capabilities of CIS under normal circumstances, but include functionality to allow them to function in local mode when services are not available from CIS 110 due to network unavailability (or less commonly, due to CIS unavailability). In preferred embodiments, kiosks that operate in local mode some or all of the time will still communicate with CIS 110 to send transaction records, as will be described in detail below.

In some environments, CIS 110 may be owned and run by one of a number of commercial entities (credential vendors) who provide credentialing services under the supervision of, or on behalf of, a governmental or quasi-governmental agency authorized to oversee the generation of identification credentials. A possible analogy is the manner in which a postal service approves postage vendors (e.g., Neopost Inc., Pitney Bowes Inc.) to manufacture and distribute postage meters. The possible presence of such an authority is illustrated by network 100 further including a credentialing authority system (CAS) 140 in communication with CIS via a dedicated link 142 or via communications network 125.

In furtherance of this possible analogy to selling postage, to the extent that the identification cards have a government fee associated with them, a similar set of funding transactions and rules between the credentialing authority and the credential vendor or vendors could apply. Where a credentialing authority is involved, the CVSs may be operated by the credentialing authority or by the credential vendors. Thus a CVS would need to know where to send information derived from the credentials presented by the subject for verification. This is automatically taken care of if the identification credentials identify the credential vendor. This is analogous to the postal service requirements that every postal indicium identify the meter manufacturer (i.e., the postage vendor).

### Credential Generation Station (CGS) Kiosk Computer System Configuration

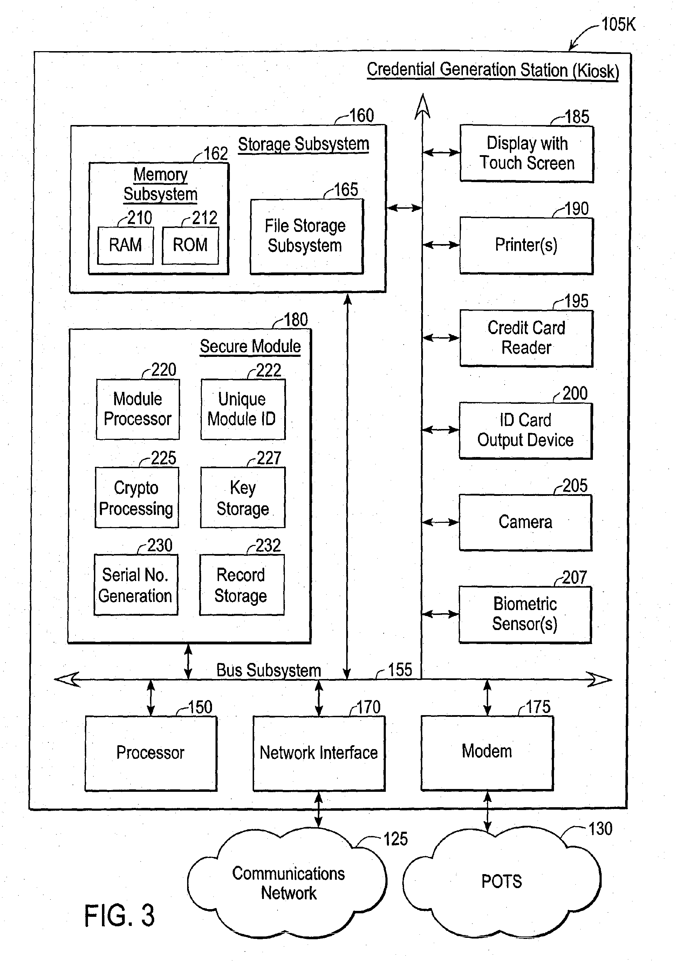

FIG. 3 is a block diagram of an exemplary hardware configuration of a kiosk, designated 105K, suitable for use as one of the credential generation stations. In a representative embodiment, the kiosk computer is a personal computer (PC) running Microsoft's Windows XP operating system, but the kiosk can be based on any other operating system (e.g., Apple's MacOS, Linux) or on any other computer system (e.g., a workstation, a computer terminal, a network computer, a mainframe) so long as the computer system can perform the functions required of the kiosk in network mode or local mode as the case may be.

The kiosk typically includes at least one processor 150, which communicates with a number of peripheral devices via a bus subsystem 155. These peripheral devices typically include a storage subsystem 160, comprising a memory subsystem 162 and a file storage subsystem 165, user interface input devices, user interface output devices, a network interface subsystem 170, and a modem 175. In order to support the ability to operate in local mode, the kiosk includes a secure module 180, which performs cryptographic signing operations to support embodiments of the invention. Kiosks that operate only in network mode would-not need such a module, or would not need as fully functional a secure module. The secure module will be described in a separate section below.

The input and output devices allow user interaction with the kiosk. In general, use of the term "input device" is intended to include all possible types of devices and ways to input information into kiosk 105K for possible communication via communications network 125 or POTS 130. Similarly, the term "output device" is intended to include all possible types of devices and ways to output information from the kiosk's computer system to a user or to another machine or computer system.

Bus subsystem 155 provides a mechanism for letting the various components and subsystems of the kiosk's computer system communicate with each other as intended. Although bus subsystem 155 is shown schematically as a single bus, embodiments of the bus subsystem may utilize multiple buses. Storage subsystem 160 stores the basic programming and data constructs that provide the functionality of the kiosk. For example, the various program modules and databases implementing the functionality of the present invention may be stored in storage subsystem 160. These program modules are generally executed by processor(s) 150.

Memory subsystem 162 typically includes a number of memories including a main random access memory (RAM) 210 for storage of instructions and data during program execution and a read only memory (ROM) 212 in which fixed instructions are stored. File storage subsystem 165 provides persistent (non-volatile) storage for program and data files, and typically includes a hard disk drive. While the kiosk's computer system is not accessible to members of the public, the storage subsystem preferably includes one or more drives for reading and writing removable media for maintenance and upgrade purposes, especially when the kiosk is not connected to any network. Such drives could include one or more of a floppy disk drive, a CD-ROM drive, a CD-R drive, a DVD drive, and the like.

Network interface subsystem 170 provides an interface to outside networks, including an interface to communications network 125, and is coupled via communications network 125 to cooperating interface devices in other computer systems. The network interface may include, for example, a modem, an Integrated Digital Services Network (ISDN) device, an Asynchronous Transfer Mode (ATM) device, a Direct Subscriber Line (DSL) device, a fiber optic device, an Ethernet card, a cable TV device, or a wireless device. Modem 175 is provided to provide an interface to the separate pathway (POTS 130) to payment authorization entity 120 when the kiosk is operating in local mode.

In accordance with the kiosk's dedicated use as a credential generation station, the peripherals are specialized for that purpose, and include an integrated display and touch screen 185, one or more printers 190, a credit card reader 195, an identification card output device 200, a camera 205 that is used to take a picture of the subject at the kiosk, and one or more biometric sensors 207 (e.g., thumbprint sensor, retinal scanner). These peripherals are normally built into the kiosk housing, which may be recessed into a wall so that only a front panel is exposed. The memory and file storage subsystems optionally provide a repository for storing the various databases that maintain information regarding kiosk transactions. In an alternative embodiment the display may be a CRT or LCD display with a separate keypad built into the kiosk housing.

Printer(s) 190 include at least a printer for printing the graphical information, human-readable alphanumeric information 17, and machine-readable information 20 (when the machine-readable information is encoded as a printed two-dimensional symbology on the identification card). There may be an additional printer for printing a receipt for the subject or reports for personnel maintaining the kiosk. The particular configuration of identification card output device 200 depends on the nature of the identification card that is going to be provided. If the machine-readable information is to be optically, magnetically, or electronically encoded, the card output device would have to provide the appropriate writing capability.

### Secure Module Configuration

Secure module 180 has one or more of the following capabilities: cryptographic processing, key generation and storage, storing a unique kiosk ID, generating unique serial numbers, storing transaction records, and communicating with other elements outside the secure module. To this end, the secure module is shown as having a processor 220 and a number of other storage or processing blocks. A storage block 222 stores a unique kiosk ID, which may include a credential vendor ID assigned by the credentialing authority, a secure module model ID, and a secure module serial number assigned by the credential vendor.

Secure module 180 can be patterned after the postal security device (PSD) specified by the USPS's IBIP specifications. One significant requirement of a PSD, in addition to digital signature generation and verification, is that it store secure accounting registers - corresponding to postal value. This latter functionality is generally not needed for service as a credential generation station, but other secure information may need to be maintained. Further, to the extent that the identification cards have a government fee associated with them, the secure module might need to store funding information corresponding to the accounting registers in PSDs.

Further in accordance with the credential generation requirements for a specific embodiment, secure module 180 includes cryptographic software 225 to enable processor 220 to perform cryptographic processing, including generating a key pair and generating and verifying digital signatures in accordance with the algorithm that is used by the particular digital signature technique (e.g., DSA, RSA, ECDSA―currently preferred). In support of the digital signature functionality, the secure module also stores the PSD X.509 certificate serial number, the secure module private key, and the common parameters that are used for the digital signature generation and verification. This is shown as a key storage block 227.

Secure module 180 may also includes two additional elements that are used to support certain embodiments: software 230 to support the generation of unique transaction serial numbers, and non-volatile storage 232 for transaction records. As will be discussed below, the transaction records are periodically sent to CIS 110 over communications network 125 or by some other authorized pathway.

Although a single processor is capable of performing all the secure module functions discussed above, cryptographic processing and serial number generation could be performed by separate processors or special purpose hardware. It is also possible that transaction records could be stored in the kiosk but outside the secure module. As mentioned above, the kiosk periodically sends the transaction records to CIS 110. This could occur as a two-step process. For example, the secure module could store up to a certain number of indicium transaction records inside the secure module, and then send them for temporary storage in the kiosk's storage subsystem 160. Indeed, the records could be stored in other locations, such as on another computer in communication with the kiosk. Security could be further enhanced by having secure module 180 digitally sign and/or encrypt the transaction records prior to sending the records outside the secure cryptographic boundary (whether for storage in the kiosk or transmission to the CIS for storage at the CIS).

A secure module with less functionality could be appropriate in certain cases. One such case, for example, is where the kiosk is configured to operate only in network mode, and therefore relies on the CIS to perform the cryptographic signing operations (and any required accounting operations) in connection with generating identification credentials. In some implementations, the kiosk would still verify digital signatures generated by the CIS.

### Credential Verification Station (CVS) Computer System Configuration

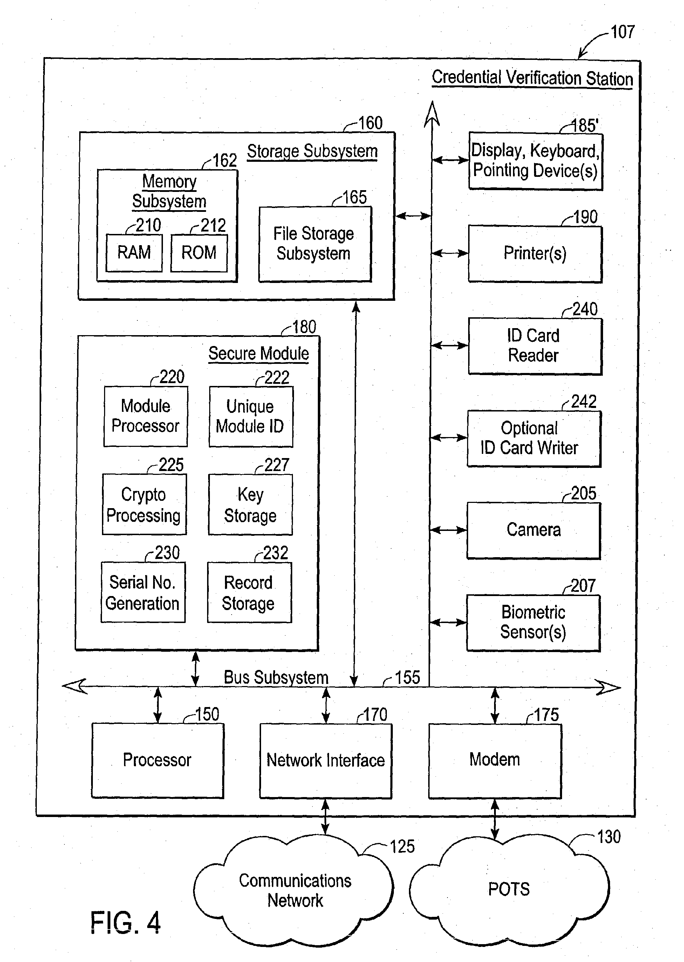

FIG. 4 is a simplified block diagram of an exemplary hardware configuration of a credential verification station. The CVS contains many of the components found in CGS kiosk 105K, but in typical embodiments, the CVS would not be implemented as a kiosk. Corresponding elements are denoted with corresponding reference numerals, and except where there are differences relative to the CGS, the elements will not be described. While kiosk 105K has a touch screen 185 as the user interface, CVS is more likely to have separate display, keyboard, and pointing devices (denoted with reference numeral 185'). A touchscreen could be used however.

CVS 107 generally does not need to verify payment with a credit card reader (although one could be provided if desired), but the CVS does need to read identification cards, and is thus provided with an identification card reader 240. In some embodiments, the CVS might augment information that is encoded magnetically, optically, or electronically, and is therefore optionally provided with an identification card writer 242. Also, CVS does not necessarily need to generate digital signatures, but is provided a secure module for storing information along the lines of CGS kiosk 105K's secure module 180. In some embodiments the CVS needs to verify digital signatures on identification cards, and in some embodiments, it might be desirable for it to cryptographically sign messages to CIS 110.

### Credentialing Infrastructure System (CIS) Computer System Configuration

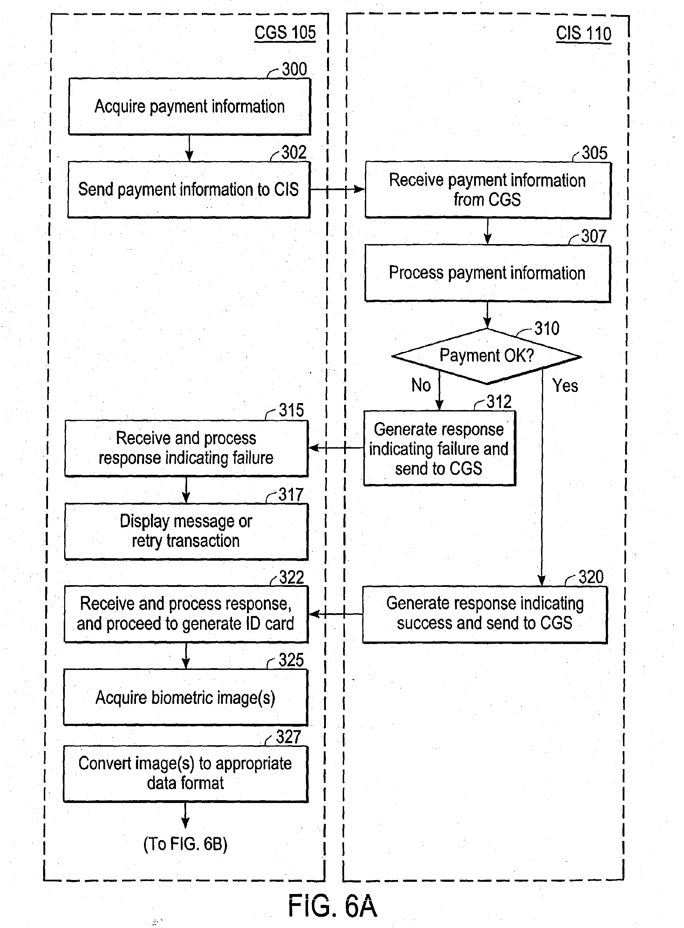

Fig. 5 is a block diagram of an embodiment of CIS 110 suitable for use with at least some embodiments of the present invention. Depending on the implementation, the CGSs and CVSs will have different capabilities, and may need to rely on the CIS to perform certain operations. For illustrative purposes, the CIS is shown as having more functionality than may be needed for some CGS and CVS configurations. In general, there is no constraint on the particular details of the CIS. The computer systems in the CIS (servers) typically have the same general configuration as the CGS kiosk computer system shown in Fig. 3, with the server systems generally having more storage capacity and computing power than the kiosk computer systems.

As shown in Fig. 5, CIS 110 may comprise one or more credential generation servers 252 (each with one or more associated cryptographic modules 253), one or more credential verification servers 255 (each with one or more associated cryptographic modules 257), and one or more database servers 258 coupled to a local communications network 260 via a plurality of communication links 262. Local communications network 260 provides a mechanism for allowing the various components of CIS 110 to communicate and exchange information with each other. Local communications network 260 may itself comprise many interconnected computer systems and communication links. Communication links 262 may be any mechanisms for communication of information as mentioned above. Web server(s) 250, credential generation server(s) 252, credential verification server(s) 255, and database server(s) 258 are designed to operate in a clustered environment to allow for expandability, and in one implementation, at least some of the servers communicate using a DCOM (Microsoft's Distributed Component Object Model) interface.

Web server(s) 252 may host the credential vendor's web site and store web pages provided by the credential vendor. Web server 252 is responsible for receiving URL requests from requesting entities (in this case kiosks 105K and possibly other user computers on the network), and for forwarding web pages corresponding to the URL requests to the requesting entity. As previously stated, these web pages allow a user to interact with CIS 110, e.g., to configure a request for identification credentials. When the requesting entity (e.g., CGS or CVS) requests communication with CIS 110, the web server may be configured to establish a communication link between the requesting entity and the CIS. For example, web server 252 may establish a secure Internet socket link. e.g., a SSL 2.0 link, between the CIS and the requesting entity, and may also be configured to control the downloading of printer control programs or other data from the CIS to the requesting entities.

In general, credential generation server(s) 252 interact with CGSs 105 in connection with credential generation and credential verification server(s) 255 interact with CVSs 107 in connection with credential verification. As will be described in more detail below, the nature of the interaction and the particular operations performed can vary, depending on the capabilities of the CGSs and the CVSs. However, it is contemplated that generation server(s) 252 and credential verification server(s) 255 will, at least under some circumstances, be required to perform cryptographic operations such as generating or verifying digital signatures. For example, some of the transactions to be described in detail below explicitly include generating and verifying digital signatures. However, it may be advantageous to have other transmissions from the CGSs and CVSs cryptographically signed (to the extent that the CGS and the CVS have the capability), even if the transaction does not itself explicitly depend on it. Also, it is advantageous to have secure (encrypted) communications between the CIS and the CGSs and CVSs. To these ends, the cryptographic modules would also store the keys needed to perform the cryptographic operations.

As discussed above, it is preferred to have each identification card bear a unique identifier for the CGS that generated the card. In some instances, where the CGS, which acquires the biometric information, is not capable of generating digital signatures, the CIS is responsible for generating the digital signature. In such a case, the CIS and the CGS are both participants, and the unique identifier could be a combination of an identifier for the CIS (there may be several) and an identifier for the CGS (typically kiosk).

Where multiple servers are shown or alluded to, it should be understood that this would include multiple software processes running concurrently on a single hardware computer (which may have one or a plurality of processors). To the extent that the cryptographic functions are a small portion of the computing load, which may entail pattern matching for credential verification server(s) where the CVS does not have the capability, multiple software processes or hardware entities may share a single cryptographic module. It may be advantageous to have different identifiers for the different software processes.

### CIS Database

Database 258 acts as a repository for storing information related to the credential generation and verification functions and typically stores information, possibly organized as separate databases, regarding the subjects for whom identification cards have been prepared, the CGSs with which the CIS communicates, and the CVSs with which the CIS communicates. Database 258 is drawn as a block, and represents one or more hardware elements (e.g., database server computers or storage elements) as well as the information stored in the database.

The term "database" as used in this application may refer to a single database or to a plurality of databases coupled to local communications network 260. Further, database 258 may be a relational database, an object-oriented database, a flat file, or any other way of storing information. In one implementation, database 258 is coupled to web server(s) 250, credential generation server(s) 252, and credential verification server(s) 255 via an ODBC interface. It should be understood, however, that the particular partitioning of the databases can be varied, augmented, or diminished depending on the specific environment and the range of functionality required.

In a representative embodiment, the subject information includes a transaction record that is generated by the CGS or the CIS's credential generation server at the time that the identification card is first generated. This could include a transaction record that was generated by a CGS operating in local mode, and later sent to the CIS. This record preferably contains all the information that is on the card, but in some implementations may not contain the graphic images at full resolution. It is also preferred that the information be updated each time an identification card is verified by a CVS. To the extent that biometric information from the subject subtly changes over time in a manner that is still considered to meet the required proximity relationship, it is possible to store the updated biometric information. This could have the effect of limiting false negative verifications. Other subject information could include payment information such as encrypted credit card information.

As mentioned above, different CGSs have different capabilities, and the transactions between the CIS and a given CGS will differ accordingly. A specific example of this is discussed below in connection with a detailed description of transactions between the CGS and the CIS in the course of generating an identification card. Although it is possible for each CGS to provide a list of all its capabilities when it identifies itself to the CIS, it is also possible for the CIS to store the necessary information in the database. The database can also store maintenance records and other pertinent information relating to the various CGSs. Similarly, and as will be discussed in detail, different CVSs have different capabilities, and the transactions between the CIS and a given CVS will differ accordingly.

Database 258 can also perform some or all of the functions of public key infrastructure system (PKIS) 115. For example, verification of digital signatures requires the signer's public key. The database can store cryptographic information such as X.509 certificate serial numbers or even the actual certificates themselves (which include the public keys). Public key information regarding a given CGS or CVS could be stored along with the other information for that CGS or CVS, or could be stored in a separate database (not explicitly shown in FIG. 5).

### Identification Card-Generation - Transactions Between the CGS and the CIS

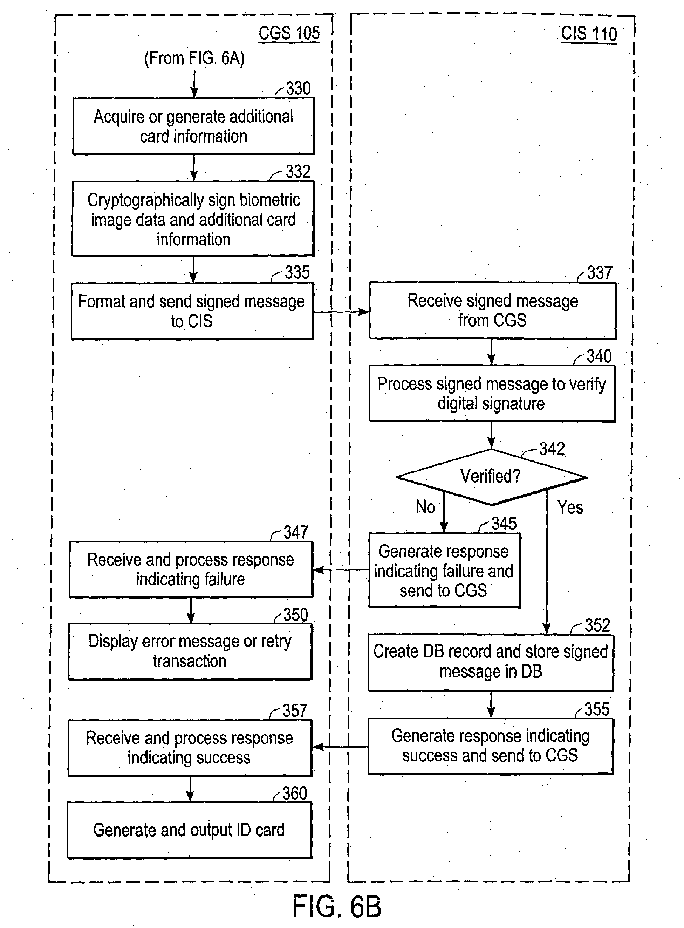

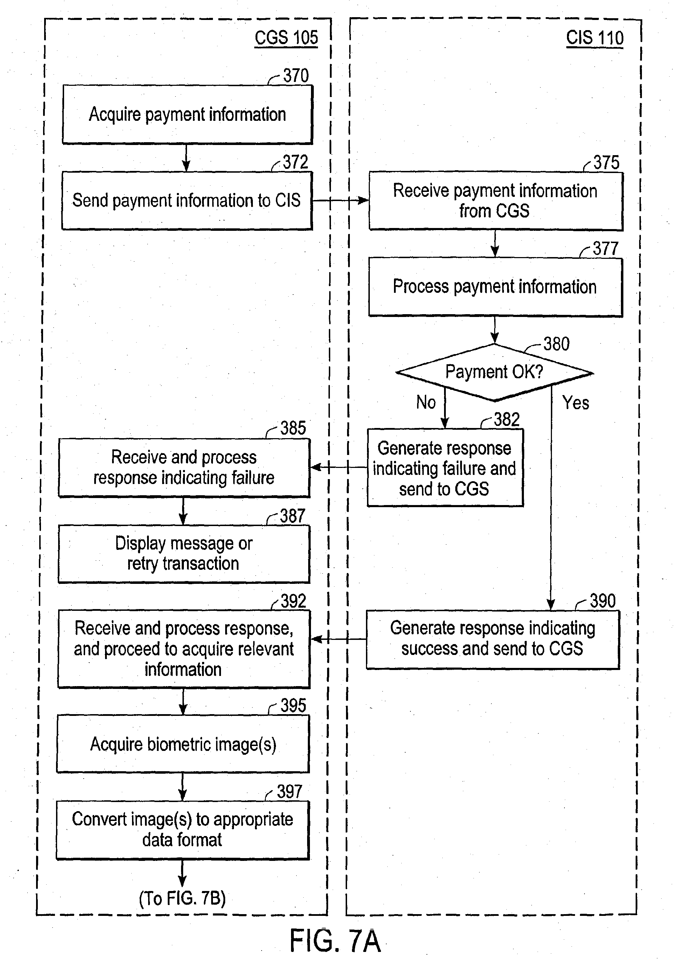

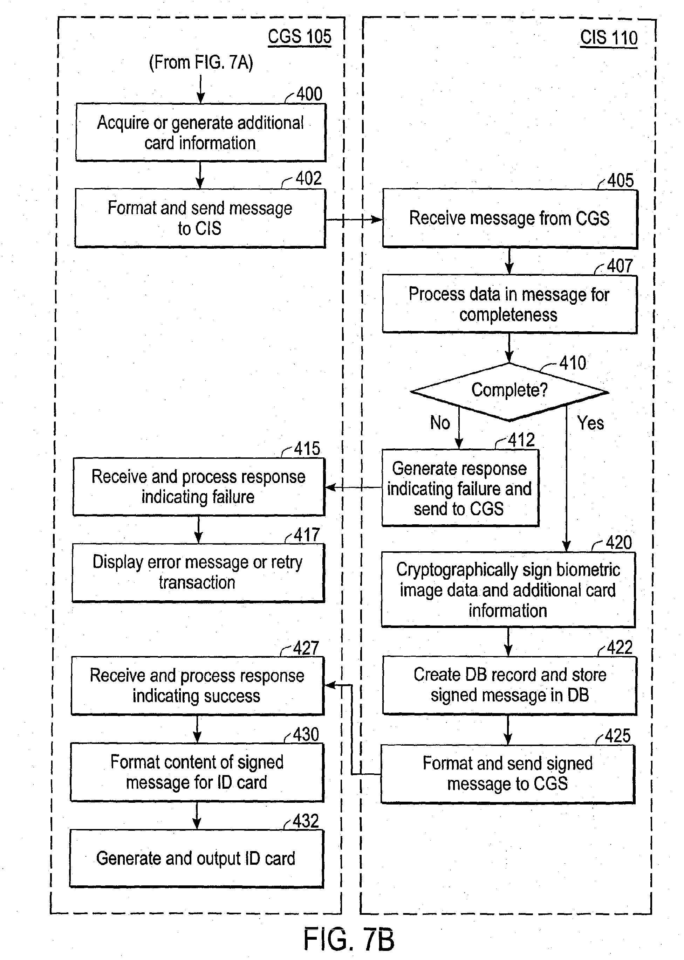

FIGS. 6A, 6B, 7A, and 7B are flowcharts illustrating the transaction between a credential generation station (CGS) 105 and credentialing infrastructure system (CIS) 110 for two embodiments of the present invention. In the embodiment of FIGS. 6A and 6B, the CGS is capable of cryptographically signing a message and sending it to the CIS, while in the embodiment of FIGS. 7A and 7B, the CGS is not capable of cryptographically signing a message.

As alluded to above, there are other possibilities for the manner in which the CGS and the CIS allocate the tasks necessary for the generation and storage of cryptographically processed messages containing biometric information. While the two cases that are the subject of the discussion immediately below deal with which entity performs the cryptographic operations, it is also possible to have variations depending on which entity is responsible for actually generating the identification card.

Turning first to FIGS. 6A and 6B, processing is generally initiated when a subject commences interacting with the kiosk in order to obtain an identification card. The CGS acquires payment information (using credit card reader 195) at a step 300, and sends this payment information to CIS 110 at a step 302. The CIS receives the payment information from the CGS at a step 305 and processes the payment information at a step 307. The CIS determines at a branch step 310 whether the payment information is in order, and if not, generates a response indicating failure and sends that response to the CGS at a step 312. The CGS receives and processes this response at a step 315, and displays an error message or retries the transaction at a step 317.

If the result of branch step 310 is affirmative, the CIS generates a response indicating success and sends this response to CGS 105 at a step 320. The CGS receives this response and proceeds to generate the identification card at a step 322. To this end, the CGS acquires one or more biometric images (using camera tool 205 or biometric sensor(s) 207) at a step 325, converts the images to an appropriate data format at a step 327, and acquires or generates additional card information at a step 330. The CGS then cryptographically signs the biometric image data and additional card information at a step 332. The CGS then formats the signed message and sends it to CIS 110 at a step 335.

The CIS receives the signed message from the CGS at a step 337, processes the signed message including cryptographically verifying the digital signature at a step 340. The CIS determines at a branch step 342 whether the digital signature verified, and if not, generates a response indicating failure, and sends it to CGS at a step 345. CGS 105 receives and processes the response indicating failure at a step 347 and displays an error message or retries the transaction at a step 350.

If the result of branch step 342 is affirmative, CIS then creates a database record and stores the signed message in the database at a step 352. The CIS then generates a response indicating success and sends it to the CGS at a step 355. CGS 105 receives the response indicating success at a step 357, and generates and outputs the identification card at a step 360. The response indicating success could be cryptographically signed by the CIS, in which case the CGS would cryptographically verify the digital signature before generating and outputting the identification card.

FIGS. 7A and 7B, taken together, provide a flowchart showing the transaction between the CGS and the CIS when the CGS is not capable of performing cryptographic operations. Many of the steps in the transaction are similar to those of FIGS. 6A and 6B. The CGS acquires payment information at a step 370 and sends it to CIS 110 at a step 372. The CIS receives the payment information at a step 375, and processes the payment information at a step 377. The CIS determines at a branch step 380 whether the payment is in order, and if not, generates a response indicating failure and sends that to CGS 105 at a step 382. CGS 105 receives and processes the response indicating failure at a step 385, and displays an error message or retries the transaction at a step 387.

If the result of branch step 380 is affirmative, the CIS generates a response indicating success and sends it to CGS 105 at a step 390. CGS 105 receives the response and proceeds to acquire the relevant information for the identification card at a step 392. To this end, CGS 105 acquires one or more biometric images at a step 395, converts the images to an appropriate data format at a step 397, and acquires or generates additional card information at a step 400.

The CGS formats the data and sends the message to CIS 110 at a step 402. CIS 110 receives the message from the CGS at a step 405 and processes the data to ensure completeness at a step 407. At a branch step 410, the CIS determines whether the data is complete, and if not, generates a response indicating failure and sends it to CGS 105 at a step 412. The CGS receives and processes the response indicating failure at a step 415, and displays an error message or retries the transaction at a step 417.

If the result of branch step 410 is affirmative, the CIS cryptographically signs the biometric image data and additional card information at a step 420. The CIS then creates a database record and stores the signed message in the database at a step 422. CIS 110 then formats and sends the signed message to CGS 425. The CGS receives the signed message at a step 427, and formats the content of the signed message in an appropriate manner for the identification card at a step 430. The CGS then generates and outputs the identification card at a step 432.

### Identification Card Verification - Transactions Between the CVS and the CIS

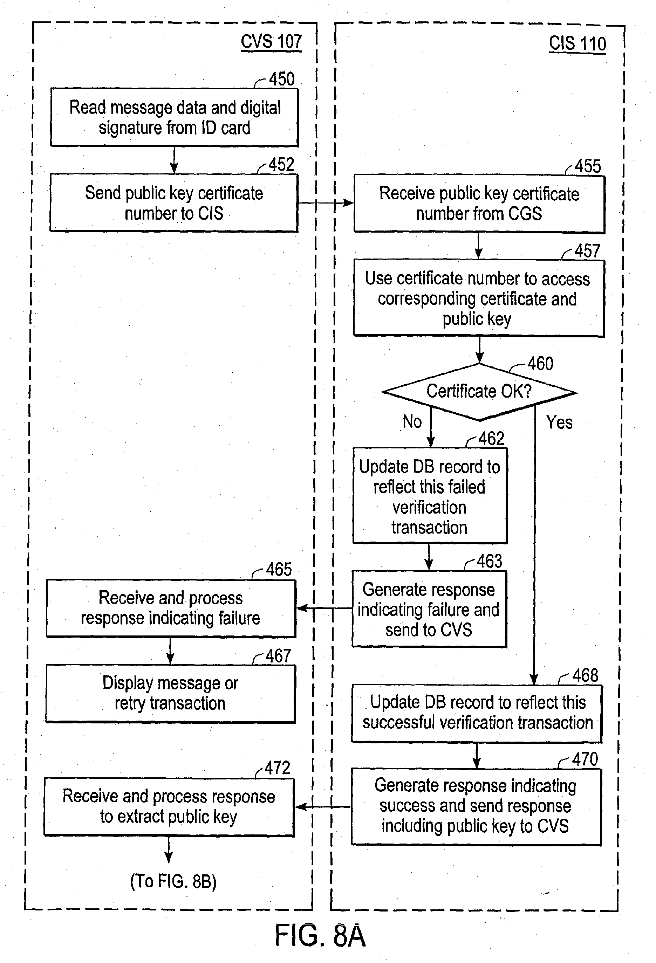

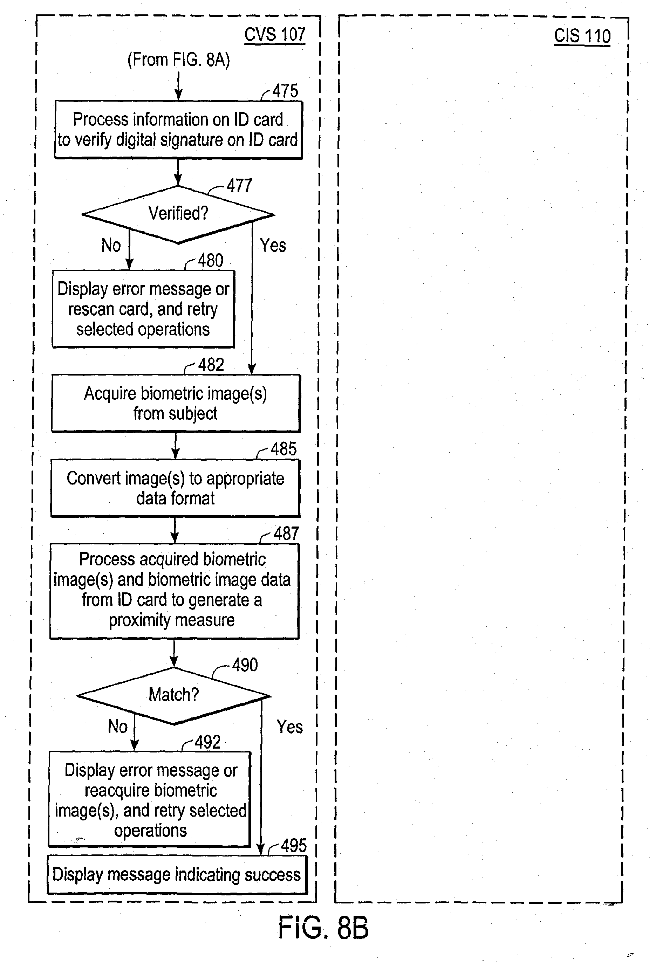

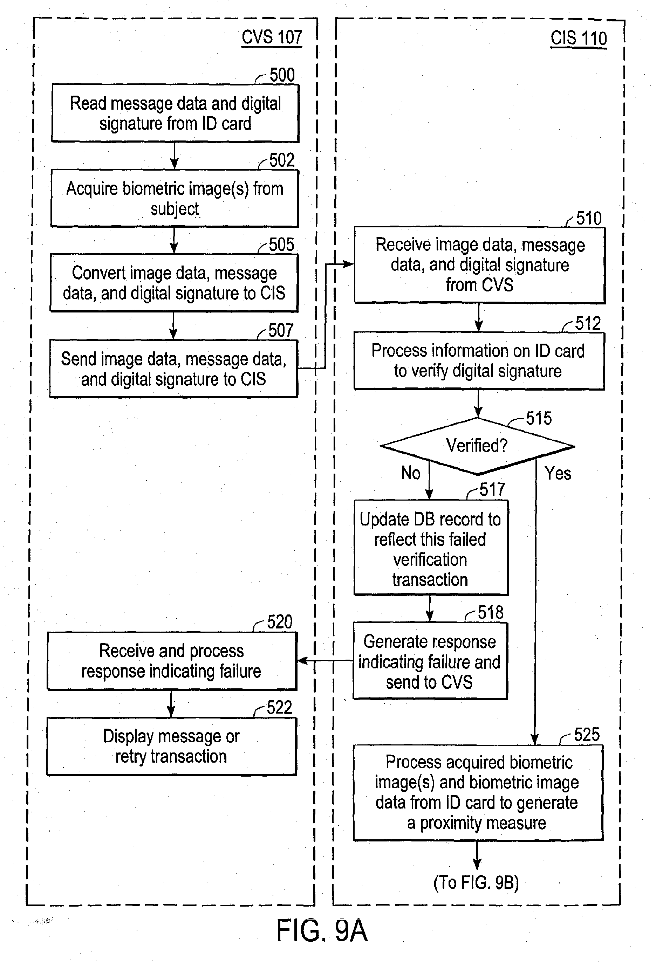

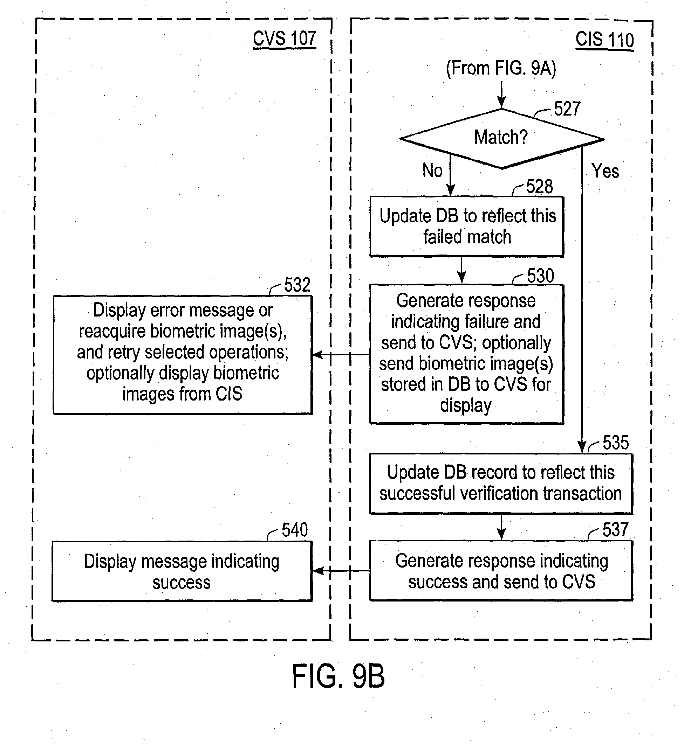

FIGS. 8A, 8B, 9A, and 9B are flowcharts illustrating the transaction between a credential verification station (CVS) 107 and CIS 110 for two embodiments of the present invention. In the embodiment of FIGS. 8A and 8B, CVS 107 is capable of verifying digital signatures and matching acquired biometric information with stored biometric information, while in the embodiment of FIG. 9A and 9B, the CVS is not equipped to do these operations, but rather relies on CIS 110 to perform the operations.

Similarly, as alluded to above, there are other possibilities for the manner in which the CVS and the CIS allocate the tasks necessary for the retrieval and verification of cryptographically processed messages containing biometric information. For example, other variations would have the CVS capable of verifying digital signatures, or matching acquired biometric information with stored biometric information, but not both.

Turning first to FIGS. 8A and 8B, processing is generally initiated when a subject has presented an identification card for inspection and an operator inputs the card to the CVS. The CVS reads message data and the digital signature from an identification card at a step 450, extracts the public key certificate number from the message data, and sends the certificate number to CIS at a step 452. The CIS receives the public key certificate number at a step 455 and accesses the corresponding public key at a step 457. At a branch step 460, the CIS determines whether the certificate is in order. If not, the CIS updates the database to reflect the failure at a step 462, and generates a response indicating failure and sends that to the CVS at a step 463. The CVS receives and processes the response indicating failure at a step 465, and displays an error message or retries the transaction at a step 467. In this regard, retrying the transaction could entail attempting to reread the message data and digital signature to see if any different data is acquired.

If the result of branch step 460 is affirmative (i.e., the certificate was in order), the CIS updates the database to reflect the success at a step 468, and generates a response indicating success and sends that response, including the public key, to CVS 107 at a step 470. The CVS receives the public key at a step 472 and uses the public key to perform the digital signature verification operations on the digital signature from the Identification card at a step 475. If the digital signature does not verify, as determined at a branch step 477, the CVS displays an error message or rescans the card and retries selected operations at a step 480.

If the result of branch step 477 is affirmative (i.e., the digital signature did verify), CVS 107 acquires one or more biometric images from the subject at a step 482, converts the images to an appropriate data format at a step 485, performs operations to calculate a proximity measure between the two sets of image data at a step 487. If at a branch step 490, it is determined that the two sets of image data do not match sufficiently, the CVS displays an error message or reacquires biometric images and retries selected operations at a step 492. If the result of branch step 490 is affirmative (i.e., there was a sufficient match), the CVS displays a message indicating success at a step 495. The invention does not rely on any particular form of proximity measure; for example, any conventional techniques for pattern matching, or parameterization followed by parameter matching could be readily used.

FIGS. 9A and 9B, taken together, provide is a flowchart showing the transaction between a CVS 107 and CIS 110 where the CVS relies on functionality at the CIS to verify digital signatures and to match biometric image data. The CVS reads message data and the digital signature from the identification card at a step 500, acquires biometric images from the subject at a step 502, converts the images to an appropriate data format 505, and sends the acquired image data, message data, and digital signature to CIS 110 at a step 507.

CIS 110 receives the image data, message data (which includes image data from the card), and the digital signature at a step 510, and at a step 512 processes the information to determine whether the digital signature verifies. If, at a branch step 515, it is determined that the digital signature did not verify, the CIS updates the database to reflect the failure at a step 517, and generates a response indicating failure and sends it to CVS 107 at a step 518. CVS 107 receives and processes the response indicating failure at a step 520, and displays an error message or retries the transaction at a step 522.

If the result of branch step 515 is affirmative (i.e., the digital signature verified), the CIS processes the acquired biometric image data and the biometric image data from the card to compute a proximity measure at a step 525, and determines at a branch step 527 whether a proximity measure is sufficient to indicate a match. If the result of branch step 527 is negative, the CIS updates the database to reflect the match failure at a step 528, and generates a response indicating failure and sends the response to the CVS at a step 530. It may optionally also send biometric images stored in its database to the CVS for display.

The CVS, on receiving the message indicating failure, displays this error message or reacquires biometric images and retries selected operations at a step 532. It may also optionally display the biometric images from CIS 110 for an operator to note the nature of the discrepancy. If the result of decision branch step 527 is affirmative (i.e., there was a sufficient match), the CIS updates the corresponding database record of this step 535, and generates a response indicating success and sends that to CVS 107 at a step 537. The CVS receives this message and displays a message indicating success at a step 540.

### Issues Surrounding Verifying Subject's Identity

The machine-readable portion of the identification card, by virtue of the digital signature or other cryptographic identifier, provides assurance that the data in machine-readable form has not been altered since the card was generated. Further, the image of the subject's face on the card provides a way for a human operator to compare that image with the subject presenting the card. However, there is the risk that the human-readable graphical information is altered to resemble a different subject. One way of addressing this, as described above, is to re-acquire biometric information from the subject and subject this to the proximity matching with the machine-readable information on the card, or the full biometric image data stored by the CIS. This, of course, requires that the CVS have one or more biometric sensors as shown in the CVS of FIG. 4.

There may, however, be situations where it is not practical or feasible to have biometric sensing at every CVS. One way to address this is to have the CVS scan the human-readable image(s) from the card, and use that instead of the re-acquired biometric image(s). However, even this may be impractical since it would then be necessary to provide additional scanning capability to the CVS. However, this security can still be provided by having the CVS display or print the images as reconstructed from the machine-readable information on the card, or the full biometric image data stored by the CIS.

Printing or displaying the images was alluded to in the description of steps 530 and 532 of optionally sending the CVS the biometric image(s) stored in the database and having the CVS optionally display the image(s). This was described in conjunction with matching the acquired image data with the image data on the card, but it should be recognized that this may serve as the only way of matching the subject presenting the card with the subject whose biometric information is encoded in the machine-readable portion of the card. In this case, it would be the job of the human operator to match a printed or displayed image with the subject.

A possibly related issue may arise if it is considered necessary to ensure, where the biometric information includes at least two disparate types of information (e.g., picture of face and fingerprint as in the specific embodiment), that the disparate types of information are being acquired from the same subject. One approach would be to generated an image of the subject as the disparate types of information are being acquired, and incorporating information regarding the image as part of the biometric information that is incorporated into the cryptographic identifier. An alternative approach, applicable where a trusted individual was present to witness the biometric information being acquired, is to incorporate information regarding the witnessing as part of the card information that is incorporated into the cryptographic identifier.

As mentioned above, subject information that is not biometric information is not inherently trustworthy. In the example above, the subject was permitted to enter arbitrary name and address information. Although this is not a significant deficiency, there may be circumstances where it is desired that the non-biometric subject information be reliable. As mentioned above, this can be accomplished through the use of a trusted individual who obtains independent identification information; however, it is also possible to achieve increased reliability without the need for a trusted individual. In particular, a self-service CGS kiosk could be configured so that the identification card is not delivered to the subject at the CGS kiosk, but rather that it is mailed to the subject at the address provided by the subject. A further level of reliability could be achieved by requiring that the address to which the identification card is mailed to match the billing address on the credit card used by the subject to pay for the identification credentials.

### Additional Variations

In the detailed transactions described above in connection with FIGS. 6A, 6B, 7A and 7B, CGS 105 was in communication with CIS 110 during the generation of the identification card, and creating the database record occurred as part of the transaction. This was true even in the embodiment of FIGS. 6A and 6B where the CGS was fully capable of generating the identification card without support from the CIS. As mentioned, payment authorization does not necessarily require participation of the CIS. However, where kiosks are required to operate in local mode, either as a matter of course or as a result of temporary inability to communicate with the CIS, it is preferred that the CGS send transaction records to the CIS as soon as is practical.

The particular identification card 10 described above includes most or all the information acquired by the CGS, namely the biometric image(s), the card information, a machine-readable version of all the information on the card and the cryptographic identifier incorporating all that information. As mentioned above, the card information preferably includes a unique CGS of CGS/CIS identifier. When such an identifier is combined with a unique (to a given CGS) serial number, the combination is globally unique, and can be used as an index to the database. A time stamp, so long as sufficiently precise, would provide such a unique serial number, although increasing integers or a pseudo-random sequence of integers would also be suitable.

At the other extreme in card configurations is a card that only contains the unique transaction number (card number) that was generated at the time that the biometric images and other information were obtained. Indeed, the transaction number would not have to be printed or stored on a card, but rather a subject at a CVS could just provide the transaction number (e.g., from memory). The CVS would then acquire biometric images, and send those along with the transaction number to the CIS (possibly in a cryptographically signed message). The CIS would then use the transaction number to access the stored transaction record, match the newly acquired biometric image information with that in the transaction record, and signify whether a suitable match was found.

In the embodiments described above, the CVS only acquires biometric information if the digital signature verification is successful. However, this is not necessary to the invention. Rather, the necessary condition for a successful verification of the subject's identity (relative to the identification card) is that the digital signature verification is successful and the biometric information acquired from the subject presenting the card match the stored biometric information. Therefore, in some embodiments, biometric information is acquired before the digital signature is verified. This may be convenient where the digital signature verification is delayed (e.g., the CVS encounters a delay in retrieving the public key). Further, it may be desirable to perform both tests (digital signature and biometric match) in all cases, even if it is known that one of the tests has already failed.

Some of the design considerations for embodiments of the invention will be driven by the intended use of the identification cards and the adjunct databases. For example, the databases of biometric information maintained by the CIS could be a useful adjunct to databases maintained by various law enforcement authorities. For example, biometric information that is acquired at a CGS or at a CVS could be checked against biometric data stored in databases maintained by law enforcement authorities.

Further, the CIS can make use of its own databases for gathering statistics and the like. For example, the same matching algorithms that check biometric data presented at a CVS with previously stored biometric information could be used to check biometric data in new transaction records against biometric data in existing transaction records. This could reveal suspicious patterns such as subjects acquiring identification cards with different non-biometric information. While it might be impractical to check all new transaction records against all previously stored records in the CIS database, such checking could be done offline during times of low use. Further, if the ability to search for records with matching biometric information is desired, the CIS database could be designed to facilitate such searching as by creating indexes based on biometric information metrics.

However, privacy or other concerns may dictate that the biometric data be stored in the CIS in a format that is incompatible with the formats used in existing databases of biometric information. Thus, the biometric information would be used for identification credential verification, but for no other purpose.

### Conclusion

While the above is a complete description of specific embodiments of the invention, the above description should not be taken as limiting the scope of the invention as defined by the claims.

## Claims

1. A method of providing verifiable identification credentials, the method comprising:
(1) in a credential generation phase,
(1a) acquiring biometric information from a subject;
(1b) incorporating the biometric information into a message;
(1c) cryptographically processing the message to generate a cryptographic identifier, the cryptographic identifier serving to authenticate the message that includes the biometric information; and
(1d) storing the message and the cryptographic identifier; and
(2) in response to a request in the field to verify the identification of a subject,
(2a) retrieving the stored message and cryptographic identifier nominally corresponding to the subject;
(2b) using the cryptographic identifier to authenticate the stored message that includes the biometric information;
(2c) acquiring biometric information from the subject in the field; and
(2d) verifying the identification of the subject only if the stored message is authenticated and the biometric information in the message bears a proximity relationship to the biometric information acquired in the field.

2. The method of claim 1 wherein the message includes information in addition to the biometric information.

3. The method of claim 1 wherein cryptographically processing the message occurs at a location that is remote from the location at which the biometric information is acquired from the subject.

4. The method of claim 1 wherein cryptographically processing the message and storing the message and cryptographic identifier occur at the same location as that where the biometric information is acquired from the subject.

5. The method of claim 1 wherein:
storing the message and the cryptographic identifier includes storing the message and the cryptographic identifier at a remote location from the credential generation station; and
retrieving the stored message and cryptographic identifier includes accessing the message and cryptographic identifier from the remote location.

6. The method of claim 1 wherein using the cryptographic identifier to authenticate the stored message and verifying the identification of the subject only if the stored message is authenticated and the biometric information in the message bears a proximity relationship to the biometric information acquired in the field are performed at the same location at which biometric information is acquired from the subject in the field.

7. The method of claim 1 wherein at least one of using the cryptographic identifier to authenticate the stored message and verifying the identification of the subject only if the stored message is authenticated and the biometric information in the message bears a proximity relationship to the biometric information acquired in the field is performed at a location that is remote from the location at which the biometric information is acquired from the subject in the field.

8. The method of claim 1 wherein:
storing the message and the cryptographic identifier includes storing the message and the cryptographic identifier on a portable unit that is provided to the subject; and
retrieving the stored message and cryptographic identifier includes reading the message and cryptographic identifier from the portable unit.

9. The method of claim 8 wherein:
the portable unit has at least one of a printable region, a magnetic region, and an optical region; and
storing the message and the cryptographic identifier includes at least one of printing the message and the cryptographic identifier on the printable region, encoding the message and the cryptographic identifier in the magnetic region, and encoding the message and the cryptographic identifier in the optical region.

10. The method of claim 1 wherein the cryptographic identifier is a digital signature of the message that includes the biometric information.

11. The method of claim 1 wherein the cryptographic identifier is an encrypted version of the biometric information.

12. The method of claim 1 wherein:
the biometric information includes at least two disparate types of information; and
the method further comprises verifying that the disparate types of information are being acquired from the same subject.

13. The method of claim 12 wherein verifying that the disparate types of information are being acquired from the same subject comprises:
generating an image of the subject as the disparate types of information are being acquired; and
incorporating information regarding the image as part of the biometric information that is incorporated into the cryptographic identifier.

14. The method of claim 12 wherein verifying that the disparate types of information are being acquired from the same subject comprises:
having a trusted individual witness the biometric information being acquired from the subject; and
incorporating information regarding the witnessing as part of the biometric information that is incorporated into the cryptographic identifier.

15. A method of providing verifiable identification credentials, the method comprising:
(1) at a credential generation station,
(1a) acquiring biometric information from a subject;
(1b) incorporating the biometric information into a message;
(1c) cryptographically processing the message to generate a cryptographic identifier, the cryptographic identifier serving to authenticate the message that includes the biometric information; and
(1d) storing the message and the cryptographic identifier on a portable unit that is provided to the subject; and
(2) in response to a request in the field to verify the identification of a subject,
(2a) retrieving the stored message and cryptographic identifier nominally corresponding to the subject;
(2b) using the cryptographic identifier to authenticate the stored message that includes the biometric information;
(2c) acquiring biometric information from the subject in the field; and
(2d) verifying the identification of the subject only if the stored message is authenticated and the biometric information in the message bears a proximity relationship to the biometric information acquired in the field.

16. A method, carried out at a credential generation station, of providing verifiable identification credentials, the method comprising:
acquiring biometric information from a subject;
incorporating the biometric information into a message;
cryptographically processing the message to generate a cryptographic identifier, the cryptographic identifier serving to authenticate the message that includes the biometric information; and
storing the message and the cryptographic identifier for subsequent retrieval.

17. The method of claim 16 wherein:
the message and the cryptographic identifier are stored in machine-readable form; and
at least a portion of the biometric information is stored in human readable form.

18. The method of claim 17 wherein:
the biometric information includes an image of the subject's face; and
a visual representation of the image is provided with the stored biometric information and the cryptographic identifier.

19. A method of verifying the identification of a subject, the method comprising:
processing a cryptographic identifier and a message that includes previously acquired biometric information, the cryptographic identifier and the message nominally corresponding to the subject;
determining from the processing whether the cryptographic identifier authenticates the message that includes biometric information;
acquiring biometric information from the subject in the field; and
verifying the identification of the subject only if the message is successfully authenticated and the biometric information acquired in the field satisfies a proximity relationship to the biometric information from the message.

20. The method of claim 19 wherein:
the previously acquired biometric information includes an image of the subject's face;
acquiring the biometric information in the field includes a human user visually inspecting the subject's face; and
the proximity relationship is evaluated by the human user comparing the subject's face with the stored image of the subject's face.

21. The method of claim 19 wherein:
acquiring the biometric information in the field includes generating an electronic version of the acquired biometric information; and
the proximity relationship is evaluated by a computer system comparing the electronic version of the biometric information with the stored biometric information.

22. A processor-based credential generation apparatus comprising:
a biometric module for acquiring biometric information from a subject;
a cryptographic module for generating a cryptographic identifier for a message that includes said biometric information from said biometric module; and
an output module that transmits said message and cryptographic identifier for storage.

23. The credential generating apparatus of claim 22, and further comprising an encoder in communication with said output module for encoding said message and said cryptographic identifier in a portable unit that is provided to the subject.

24. The credential generating apparatus of claim 23 wherein said encoder is at a location proximate said biometric module to allow the subject to obtain said portable unit without substantial delay.

25. The credential generating apparatus of claim 23 wherein said encoder is at a location remote from said biometric module so that said portable unit cannot be provided to the subject without substantial delay.

26. The credential generating apparatus of claim 22, and further comprising a network interface that allows said output module to transmit said message and cryptographic identifier over a network to a storage device located on said network.

27. The credential generating apparatus of claim 22, and further comprising:
an encoder in communication with said output module for encoding said message and said cryptographic identifier in a portable unit that is provided to the subject; and
a network interface that allows said output module to transmit said message and cryptographic identifier over a network to a storage device located on said network.

28. A processor-based credential verification apparatus comprising:
a biometric module for acquiring biometric information from a presented subject;
an access module that receives a previously stored message having an associated cryptographic identifier, said previously stored message including biometric information previously acquired from a subject nominally corresponding to the presented subject;
a cryptographic module for verifying said cryptographic identifier to authenticate said previously stored message; and
a matching module for determining whether said biometric information from the presented subject bears a proximity relationship to the biometric information included in said message; and
an output module that signifies a successful identity verification only if (a) said cryptographic module successfully verifies said cryptographic identifier, and (b) said matching module determines that said biometric information from the presented subject bears said proximity relationship to the biometric information in said message.

29. A distributed credential generation and verification system comprising:
a credential generation station (CGS) including
a CGS biometric module for acquiring biometric information from a subject seeking identification credentials, and
an encoder for encoding a message containing said biometric information acquired by said CGS biometric module and a cryptographic identifier in a portable unit that is provided to the subject seeking identification credentials;
a credential verification station (CVS) including a CVS biometric module for acquiring biometric information from a subject presenting identification credentials;
at least one instance of a cryptographic identifier generation module for generating a cryptographic identifier for a message that includes said biometric information from said CGS biometric module;
at least one instance of a cryptographic verification module for authenticating said message; and
at least one instance of a matching module for determining whether said biometric information from the said CVS biometric module bears a proximity relationship to the biometric information included in said message.

30. The distributed credential generation and verification system of claim 29 wherein:
an instance of said cryptographic identifier generation module is present in each of a plurality of CGSs;
an instance of said cryptographic verification module is present in each of a plurality of CVSs; and
an instance of said matching module is present in said CVS.

31. The distributed credential generation and verification system of claim 29 wherein:
an instance of said cryptographic identifier generation module is absent from said CGS; and
the system further comprises a credentialing infrastructure system (CIS) that includes an instance of said cryptographic identifier generation module.

32. The distributed credential generation and verification system of claim 29 wherein:
an instance of said cryptographic verification module is absent from said CVS; and
the system further comprises a credentialing infrastructure system (CIS) that includes an instance of said cryptographic verification module.

33. The distributed credential generation and verification system of claim 29 wherein:
an instance of said matching module is absent from said CVS; and
the system further comprises a credentialing infrastructure system (CIS) that includes an instance of said matching module.

34. A distributed credential generation and verification system comprising:
a plurality of credential generation station (CGSs), each CGS including a CGS biometric module for acquiring biometric information from a subject seeking identification credentials, and
a plurality of credential verification stations (CVSs), each CVS including a CVS biometric module for acquiring biometric information from a subject presenting identification credentials;
at least one instance of a cryptographic identifier generation module for generating a cryptographic identifier for a message that includes biometric information from a biometric module of one of said plurality of CGSs;
at least one instance of an encoding module for encoding, in a portable unit that is provided to the subject seeking identification credentials, a message containing biometric information acquired by a biometric module of one of said plurality of CGSs and a cryptographic identifier generated by one of said instances of a cryptographic identifier generation module;
at least one instance of a cryptographic verification module for authenticating said message; and
at least one instance of a matching module for determining whether biometric information from a biometric module of one of said plurality of CVSs bears a proximity relationship to the biometric information included in said message.

35. The distributed credential generation and verification system of claim 34 wherein:
an instance of said cryptographic identifier generation module is present in each of a plurality of CGSs;
an instance of said cryptographic verification module is present in each of a plurality of CVSs; and
an instance of said matching module is present in said CVS.

36. The distributed credential generation and verification system of claim 34 wherein:
an instance of said cryptographic identifier generation module is absent from at least one CGS; and
the system further comprises a credentialing infrastructure system (CIS) that includes an instance of said cryptographic identifier generation module.

37. The distributed credential generation and verification system of claim 34 wherein:
an instance of said cryptographic verification module is absent from at least one CVS; and
the system further comprises a credentialing infrastructure system (CIS) that includes an instance of said cryptographic verification module.

38. The distributed credential generation and verification system of claim 34 wherein:
an instance of said matching module is absent from at least one CVS; and
the system further comprises a credentialing infrastructure system (CIS) that includes an instance of said matching module.

39. The distributed credential generation and verification system of claim 34 wherein:
an instance of said encoding module is absent from at least one CGS; and
the system further comprises a credentialing infrastructure system (CIS) that includes an instance of said encoding module.
